# EUROPÄISCHE PATENTSCHRIFT

(11) **EP 1 362 771 B1**
(45) Veröffentlichungstag und Bekanntmachung des Hinweises auf die Patenterteilung: **13.01.2010**
(21) Anmeldenummer: 03009954.3
(22) Anmeldetag: 30.04.2003
(51) Int. Cl.: B62D 29/04, B62D 25/06, B60R 13/02

(54) **Fahrzeug-Verbundkarosserieteil**
Composite car body part
Pièce de carosserie composite

(30) Priorität: 15.05.2002 DE 10221581
(43) Veröffentlichungstag der Anmeldung: 19.11.2003
(73) Patentinhaber: Webasto AG, 82131 Stockdorf (DE)
(72) Erfinder: Dichtl, Matthias, 82547 Eurasburg (DE)
(74) Vertreter: Grünberg, Thomas

(56) Entgegenhaltungen:
- EP-A- 0 272 454
- EP-A- 1 331 164
- WO-A-99/16657
- DE-A- 3 908 433
- US-B1- 6 378 208

## Beschreibung

Die Erfindung betrifft ein Fahrzeug-Karosserieteil, insbesondere ein Fahrzeugdach, nach dem Oberbegriff des Patentanspruches 1.

Ein derartiges Fahrzeug-Karosserieteil ist beispielsweise aus der DE 199 55 167 A1 bekannt und als vorgefertigtes Dachmodul ausgebildet. Dieses Dachmodul ist in Sandwich-Bauweise hergestellt und umfaßt ein als Außenschale dienendes erstes Schichtpaket und ein als Innenschale dienendes zweites Schichtpaket, das mit dem ersten Schichtpaket verbunden ist. Die Außenschale umfaßt eine feste Außenhaut aus Kunststoff, die mit einer als Träger dienenden Hartschaumschicht hinterfüttert ist. Die Innenschale umfaßt eine Weichschaumschicht, die einerseits mit der Hartschaumschicht der Außenschale verbunden ist und andererseits, d.h. an der dem Fahrzeuginnenraum zugewandten Seite, mit einem Dekorstoff bezogen ist. Bei diesem Dachmodul besteht das Problem, daß die Außenhaut und die Hartschaumschicht aus unterschiedlichen Materialien bestehen und unterschiedliche Temperaturausdehnungskoeffizienten aufweisen. Dies kann bei einer Temperaturänderung zu einer Verformung des Dachmoduls führen, die auf das unterschiedliche laterale Ausdehnungsverhalten der beiden Materialien zurückzuführen ist. Dieser Effekt gleicht dem sogenannten Bimetalleffekt.

Insbesondere werden bei bekannten Dachmodulen eine aus einer Kunststoffolie bestehende Außenhaut mit einem Wärmeausdehnungskoeffizienten von 75 x 10⁻⁶ 1/K und ein aus einem Polyurethan/Glasfaser-Gemisch bestehender Träger mit einem Temperaturausdehnungskoeffizienten von 25 x 10⁻⁶ 1/K eingesetzt. Eine derartige Materialwahl führt bei einer Erwärmung des Dachmoduls zu einer Wölbung in Richtung der Fahrzeugumgebung und bei einer Abkühlung des Dachmoduls zu einer Wölbung in Richtung des Fahrzeuginnenraums.

Aus der DE 199 49 643 A1 ist ein Fahrzeugdach bekannt, das aus einer in ihrer Form von der Karosserieform vorgegebenen Dachhaut und einer an der dem Fahrzeuginnenraum zugewandten Seite an die Dachhaut grenzenden Dachversteifung besteht. Die Dachversteifung umfaßt eine Polyurethanplatte, die über eine Klebeschicht mit der Dachhaut verbunden ist und an ihrer dem Fahrzeuginnenraum zugewandten Seite über eine weitere Klebeschicht mit einer Deckschicht versehen ist. Auch bei diesem Fahrzeugdach besteht aufgrund des Schichtaufbaus und der unterschiedlichen Temperaturausdehnungskoeffizienten der Dachhaut und der Dachversteifung das Problem, daß sich das Fahrzeugdach aufgrund des dem Bimetalleffekt gleichenden Effekts bei einer Temperaturänderung verzieht.

Aus der DE 79 29 367 U1 ist ein Dachaufbau für Kraftfahrzeuge bekannt, der eine Dachaußenhaut umfaßt, auf die eine Kunststoffschicht aufgeschäumt ist, welche wiederum mit einer Kunststoff- oder einer Leichtmetallfolie kaschiert ist. Auch bei diesem Dachaufbau besteht die Gefahr des dem Bimetalleffekt gleichenden Effekts, da der Kunststoff- bzw. Leichtmetallfolie keine einer Verformung des Dachaufbaus entgegenwirkenden Aufgaben zuzumessen sind.

Aus der DE 100 33 232 A1 ist ferner ein Fahrzeugdachteil mit einer Kunststoff-Außenhaut bekannt, welches ein Distanzteil umfaßt, das an einer Seite über eine erste Haftmittelschicht mit der Außenhaut und an der anderen Seite über eine zweite Haftmittelschicht mit einer Glasfasermatte verbunden ist. Das Distanzteil ist ein wabenförmiges Strukturteil aus Karton, Aluminium oder Kunststoff.

Der Erfindung liegt die Aufgabe zugrunde, ein Fahrzeug-Karosserieteil der einleitend genannten Gattung zu schaffen, bei dem die Gefahr einer Deformation des Materialverbunds bei einer Temperaturänderung minimiert ist.

Diese Aufgabe ist erfindungsgemäß durch die Merkmale nach dem kennzeichnenden Teil des Patentanspruches 1 gelöst.

Der Kern der Erfindung liegt mithin darin, den Träger des Materialverbunds aus mindestens zwei Materiallagen auszubilden, die spezifische Temperaturausdehnungskoeffizienten aufweisen, so daß sich das laterale Wärmeausdehnungsverhalten des Trägers und dasjenige der Außenhaut kompensieren. Die Temperaturausdehnungskoeffizienten sind in Abhängigkeit von der Schichtdicke der jeweiligen Materiallage ausgewählt. Wenn die Materiallagen jeweils aus einem Glasfaser/Polyurethan-Gemisch bestehen, ist der Wert der Temperaturausdehnungskoeffizienten durch den Glasfaseranteil einstellbar. Der Temperaturausdehnungskoeffizient steigt in diesem Fall mit der Abnahme des Glasfaseranteils in der jeweiligen Materiallage.

Das Fahrzeug-Karosserieteil nach der Erfindung ist grundsätzlich für alle äußeren und inneren plattenförmigen Strukturen von Fahrzeugkarosserien geeignet, die als Verbundbauteil ausgeführt sind. Die bevorzugte Ausführungsform stellt jedoch ein vorgefertigtes Dachmodul dar, das in einem korrespondierend ausgebildeten Dachrahmen einer Fahrzeugkarosserie einsetzbar ist. Es ist also auch denkbar, daß das Karosserieteil als bewegte Fläche, z. B. als Schiebedach oder als Lamelle eines Lamellen-Schiebedachs, ausgebildet ist. Ferner kann der Träger zur Ausbildung eines Dachhimmels an der dem Fahrzeuginnenraum zugewandten Seite mit einem textilen oder folienartigen Material beschichtet sein.

Die Außenhaut, die beispielsweise aus einer Folie aus ABS, ASA-PC, ASA oder PC besteht, hat bei üblichen, als Dachmodul ausgebildeten Fahrzeug-Karosserieteilen in der Regel einen höheren Temperaturausdehnungskoeffizienten als der Träger. Aus diesem Grunde ist bei einer bevorzugten Ausführungsform des Fahrzeugkarosserieteils nach der Erfindung der Temperaturausdehnungskoeffizient der ersten Materiallage kleiner als der Temperaturausdehnungskoeffizient der zweiten Materiallage. Der Temperaturausdehnungskoeffizient der zweiten Materiallage ist des weiteren vorzugsweise kleiner als der Temperaturausdehnungskoeffizient der Außenhaut. Beispielsweise hat der Temperaturausdehnungskoeffizient der Außenhaut einen Wert von 75 x 10⁻⁶ 1/K, der Temperaturausdehnungskoeffizient der ersten Materiallage einen Wert von 25 x 10⁻⁶ 1/K und der Temperaturausdehnungskoeffizient der zweiten Materiallage einen Wert von etwa 50 x 10⁻⁶ 1/K.

Ein Distanzhalter kann zwischen Schichten aus einem Polyurethan/Glasfaser-Gemisch angeordnet sein, welche vorzugsweise die erste und die zweite Materiallage bilden und mithin mit unterschiedlichen Temperaturausdehnungskoeffizienten ausgebildet sind.

Der Distanzhalter, der aus einer Kartonwabe, einer Kunststoffwabe, einem Schaum bestehen kann, kann ein- oder beidseitig von einer Sperrschicht begrenzt sein, die ein Eindringen von Polyurethanschaum und/oder in diesem eingebettete Glasfasern in den Distanzhalter verhindert. Die Sperrschicht, die beispielsweise eine Dicke von etwa 0,1 mm aufweist, besteht vorzugsweise aus einem Vliesmaterial, insbesondere einem Glasvließmaterial.

Bei einer speziellen Ausführungsform des Fahrzeug-Karosserieteils nach der Erfindung ist an der der Außenhaut abgewandten Seite des Trägers eine sogenannte Gegenzugfolie angeordnet, die beispielsweise aus einem kostengünstigen Kunststoff wie ABS oder auch aus ABS-PC, ASA-PC, ASA oder PC besteht und einen höheren Temperaturausdehnungskoeffizienten als die Außenhaut aufweisen kann. In diesem Falle kann das Fahrzeug-Karosserieteil in symmetrischer Sandwich-Bauweise ausgebildet sein und fünf Schichten umfassen, welche aus der Außenhaut, einer sich an die Außenhaut anschließenden Glasfaser/Polyurethan-Schicht, einem sich an diese anschließenden Distanzhalter, einer weiteren Glasfaser/Polyurethan-Schicht sowie der Gegenzugfolie besteht. Der Glasfaseranteil der beiden Glasfaser/Polyurethan-Schichten kann einen unterschiedlichen Wert aufweisen.

Die einzelnen Materiallagen des Trägers, insbesondere solche, die aus einem Glasfaser/Polyurethan-Gemisch bestehen, können nach einem Spritzverfahren oder auch mit einer Wabenstruktur und/oder einer Glasmatte gefertigt sein.

Des weiteren kann an der an die Außenhaut grenzenden Seite des Trägers eine die laterale Ausdehnung der Außenhaut begrenzende Materialschicht angeordnet sein, welche beispielsweise aus einer Glasfasermatte oder auch aus einer Aluminiumfolie besteht.

Weitere Vorteile und vorteilhafte Ausgestaltungen des Gegenstandes nach der Erfindung sind der Beschreibung, der Zeichnung und den Patentansprüchen entnehmbar.

Vier Ausführungsbeispiele des Fahrzeug-Karosserieteils nach der Erfindung sind in der Zeichnung schematisch vereinfacht dargestellt. Es zeigt
- Fig. 1: eine Teilansicht eines Personenkraftwagens mit einem Dachmodul;
- Fig. 2: einen Schnitt durch ein Dachmodul einer nicht beanspruchtes Teil der Erfindung;
- Fig. 3: einen Schnitt durch eine Ausführungsform eines Dachmoduls nach der Erfindung;
- Fig. 4: einen Schnitt durch eine Ausführungsform eines Dachmoduls nach der Erfindung;
- Fig. 5: einen Schnitt durch eine Ausführungsform eines Dachmoduls nach der Erfindung; und
- Fig. 6: einen Schnitt durch einen Distanzhalter.

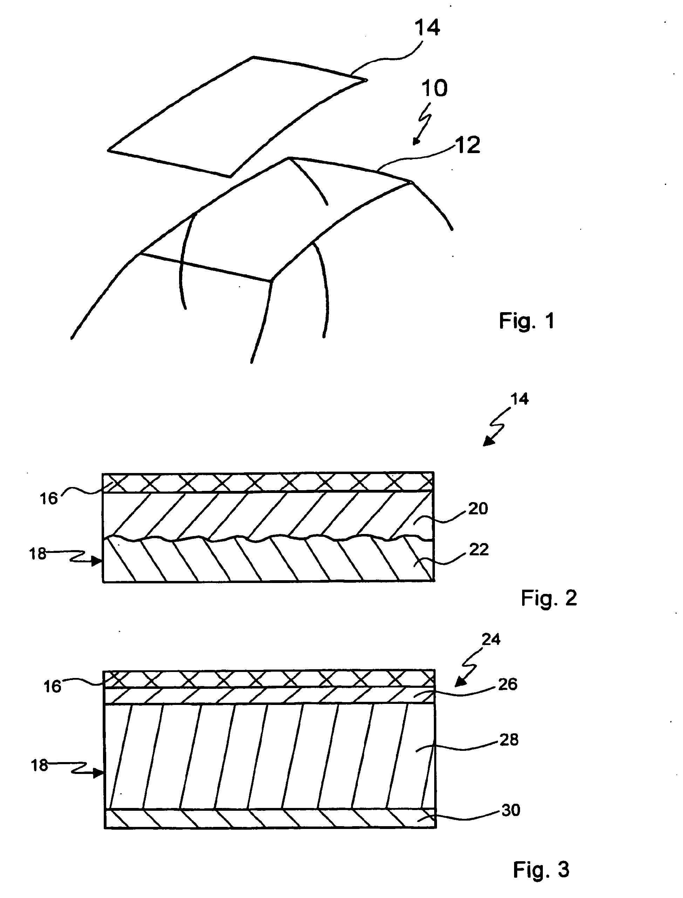

In Fig. 1 ist ein als Personenkraftwagen ausgebildetes Kraftfahrzeug 10 dargestellt, dessen Karosserie einen Dachrahmen 12 aufweist, in den ein erfindungsgemäß ausgebildetes und vormontiertes Dachmodul 14 einsetzbar ist, das einen Fahrzeuginnenraum überdeckt. Die Verbindung zwischen dem Dachmodul 14 und dem Dachrahmen 12 erfolgt über eine hier nicht näher dargestellte, umlaufende Kleberaupe.

In Fig. 2 ist ein Schnitt durch das in Fig. 1 dargestellte Dachmodul 14 gezeigt, welches mehrlagig aufgebaut ist und vor dem Einsetzen in den Dachrahmen 12 vorgefertigt ist. Das Dachmodul 14 umfaßt eine aus Kunststoff, wie beispielsweise ASA-PC, gefertigte Außenhaut 16, die eine Dicke zwischen 0,2 mm und 2,0 mm aufweist und als Tiefziehteil ausgebildet sein kann. Die Außenhaut 16 bildet die bezogen auf den Fahrzeuginnenraum außen liegende Oberfläche des Dachmoduls 14, d.h. die Dachfläche des Kraftfahrzeugs 10.

Die Außenhaut 16 ist an ihrer Unterseite bzw. Innenseite mit einem sogenannten Träger 18 hinterfüttert, der aus einer ersten Materiallage 20, die an die Außenhaut 16 grenzt, und einer zweiten Materiallage 22 besteht. Der Übergang zwischen der ersten Materiallage 20 und der zweiten Materiallage 22 ist unscharf, d.h. es liegt keine klar definierte Trennebene zwischen den beiden Materiallagen 20 und 22 vor. Vielmehr ist der Übergang zwischen den beiden Materiallagen als korrugierte bzw. im Querschnitt unregelmäßig gewellte Fläche ausgebildet.

Die beiden Materiallagen 20 und 22 bestehen jeweils aus einem Polyurethanwerkstoff, wobei die erste Materiallage 20 einen Glasfaseranteil von 50 % und die zweite Materiallage 22 einen Glasfaseranteil zwischen 0 und 5 % aufweist. Dies führt zu einem Temperaturausdehnungskoeffizienten der ersten Materiallage 20 von 25 x 10⁻⁶ 1/K und zu einem Temperaturausdehnungskoeffizienten der zweiten Materiallage 22 zwischen 40 x 10⁻⁶ 1/K und 50 x 10⁻⁶ 1/K. Der Temperaturausdehnungskoeffizient der Außenhaut 16 beträgt 75 x 10⁻⁶ 1/K.

In Fig. 3 ist eine alternative Ausführungsform eines Dachmoduls 24 dargestellt, welches ebenfalls eine aus einer Kunststoffolie bestehende Außenhaut 16 umfaßt, die auf einem Träger 18 angeordnet ist.

Der Träger 18 des Dachmoduls 24 umfaßt jedoch eine erste Materiallage 26, die an die Außenhaut 16 grenzt und durch einen Distanzhalter 28 von einer zweiten Materiallage 30 getrennt ist. Die erste Materiallage 26 besteht aus einem Polyurethanhartschaum mit einem Glasfaseranteil von 50 %, was zu einem Temperaturausdehnungskoeffizienten von 25 x 10⁻⁶ 1/K führt. Die zweite Materiallage 30 besteht ebenfalls aus einem Polyurethanhartschaum, jedoch mit einem Glasfaseranteil zwischen 0 und 50 %. Der Temperaturausdehnungskoeffizient der zweiten Materiallage 30 hat beispielsweise einen Wert von 40 x 10⁻⁶ 1/K.

Der Distanzhalter, der mit einer Dicke zwischen 4 und 10 mm ausgebildet ist, besteht aus einer Kartonwabe, einer Kunststoffwabe oder auch aus einem Kunststoffschaum. Die erste Materiallage 26 und die zweite Materiallage 30 haben jeweils eine Dicke zwischen 0,5 und 1 mm.

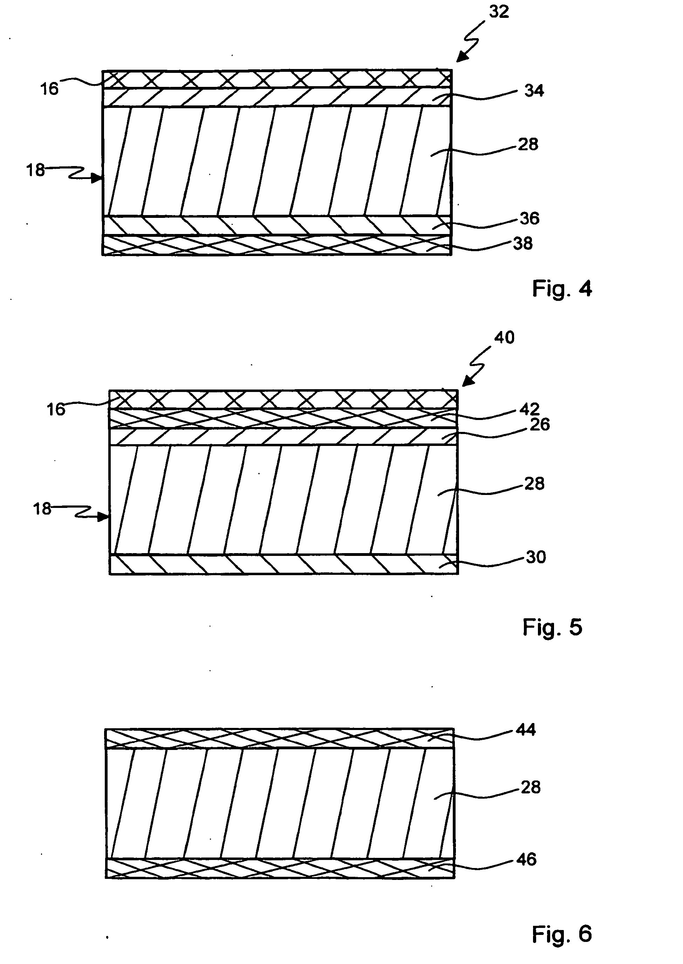

Bei dem in Fig. 4 dargestellten Ausführungsbeispiel eines Dachmoduls 32 ist an der Unterseite einer Außenhaut 16 ein Träger 18 angeordnet, der eine erste Materiallage 34 aus einem Glasfaser/Polyurethan-Gemisch mit einem Glasfaseranteil von etwa 50 % umfaßt, an die sich ein Distanzhalter mit einer Dicke zwischen 4 und 10 mm anschließt, der wiederum von einer zweiten Materiallage 36 begrenzt ist, die ebenfalls aus einem Glasfaser/Polyurethan-Gemisch besteht, dessen Glasfaseranteil zwischen 0 und 50 % liegt. Die zweite Materiallage ist von einer sogenannten Gegenzugfolie 38 begrenzt, die aus kostengünstigem ABS besteht und dessen Temperaturausdehnungskoeffizient etwa 80 x 10⁻⁶ 1/K beträgt.

Das Dachmodul 32 ist in symmetrischer Sandwich-Bauweise hergestellt, wobei die Gegenzugfolie 38 eine weitere Materiallage des Trägers 18 bildet.

In Fig. 5 ist eine vierte Ausführungsform eines Dachmoduls 40 dargestellt, dessen Aufbau weitgehend demjenigen des Dachmoduls nach Fig. 3 entspricht, sich von diesem aber dadurch unterscheidet, daß zwischen der ersten Materiallage 26 und der Außenhaut 16 eine als Glasfasermatte ausgebildete Materialschicht 42 angeordnet ist, die eine laterale Ausdehnung der Außenhaut 16 verhindern soll.

In Fig. 6 ist ein Distanzhalter 28 dargestellt, der bei einem der Ausführungsbeispiele nach Fig. 3, 4 oder 5 einsetzbar ist und beidseits mit einer Sperrschicht 44 bzw. 46 versehen ist. Die Sperrschichten 44 und 46 verhindern weitgehend ein Eindringen von angrenzendem PolyurethanSchaum sowie von in diesem eingebetteten Glasfasern in den Distanzhalter 28 und haben eine Dicke von jeweils 0,1 mm.

Die bei den vorstehend aufgeführten Ausführungsbeispielen ausgebildeten Materiallagen aus einem Glasfaser/Polyurethan-Gemisch können nach einem Spritzverfahren, beispielsweise nach einem sogenannten LFI(Long Fiber Injection)-Verfahren, oder gegebenenfalls auch nach einem Spritzverfahren, bei dem eine Wabenstruktur und/oder eine Glasmatte zum Einsatz kommen, aufgebracht sein.

### Bezugszeichen

- 10: Kraftfahrzeug
- 12: Dachrahmen
- 14: Dachmodul
- 16: Außenhaut
- 18: Träger
- 20: erste Materiallage
- 22: zweite Materiallage
- 24: Dachmodul
- 26: erste Materiallage
- 28: Distanzhalter
- 30: zweite Materiallage
- 32: Dachmodul
- 34: erste Materiallage
- 36: zweite Materiallage
- 38: Gegenzugfolie
- 40: Dachmodul
- 42: Materialschicht
- 44: Sperrschicht
- 46: Sperrschicht

## Patentansprüche

1. Fahrzeug-Karosserieteil, umfassend einen Materialverbund mit einer Außenhaut (16), die eine Oberfläche bildet, die bezogen auf einen Fahrzeuginnenraum außen liegt, und einen ersten Temperaturausdehnungskoeffizienten hat, und einem Träger (18), auf dem die Außenhaut (16) angeordnet ist und mit dem diese hinterfüttert ist,
**dadurch gekennzeichnet, dass** der Träger (18) aus mindestens einer ersten, der Außenhaut (16) zugewandten Materiallage (26, 34, 42) und einer zweiten, der Außenhaut (16) abgewandten Materiallage (30, 36, 38) besteht, deren Temperaturausdehnungskoeffizienten sich unterscheiden, so dass eine Deformation des Materialverbunds bei einer Temperaturänderung im wesentlichen unterbleibt, wobei die erste Materiallage (26, 34, 42) und die zweite Materiallage (30, 36, 38) durch einen Distanzhalter (28) aus einer Kartonwabe, einer Kunststoffwabe oder einen Kunststoffschaum voneinander getrennt sind.

2. Fahrzeug-Karosserieteil nach Anspruch 1, **dadurch gekennzeichnet, dass** der Temperaturausdehnungskoeffizient der ersten Materiallage (26, 34) kleiner als der Temperaturausdehnungskoeffizient der zweiten Materiallage (30, 36, 38) des Trägers (18) ist.

3. Fahrzeug-Karosserieteil nach Anspruch 1 oder 2, **dadurch gekennzeichnet, dass** der Temperaturausdehnungskoeffizient der zweiten Materiallage (30, 36, 38) kleiner als der Temperaturausdehnungskoeffizient der Außenhaut (16) ist.

4. Fahrzeug-Karosserieteil nach Anspruch 1 oder 2, **dadurch gekennzeichnet, dass** der Temperaturausdehnungskoeffizient der zweiten Materiallage (30, 36, 38) größer oder gleich dem Temperaturausdehnungskoeffizienten der Außenhaut (16) ist.

5. Fahrzeug-Karosserieteil nach Anspruch 1, **dadurch gekennzeichnet, dass** der Distanzhalter (28) zwischen Schichten (26, 30, 34, 36) aus einem Polyurethan/Glasfaser-Gemisch angeordnet ist, welche vorzugsweise die erste und die zweite Materiallage bilden.

6. Fahrzeug-Karosserieteil nach Anspruch 1, **dadurch gekennzeichnet, dass** der Distanzhalter (28) beidseitig von einer Sperrschicht (44, 46) begrenzt ist, die vorzugsweise aus einem Vliesmaterial besteht.

7. Fahrzeug-Karosserieteil nach einem der Ansprüche 1 bis 6, **dadurch gekennzeichnet, dass** die zweite Materiallage (30, 36) einen kleineren Glasfaseranteil als die erste Materiallage (26, 34) hat.

8. Fahrzeug-Karosserieteil nach einem der Ansprüche 1 bis 7, **dadurch gekennzeichnet, dass** der Träger (18) an seiner der Außenhaut (16) abgewandten Seite eine Gegenzugfolie (38) umfasst.

9. Fahrzeug-Karosserieteil nach Anspruch 8, **dadurch gekennzeichnet, dass** die Gegenzugfolie (38) aus ABS besteht.

10. Fahrzeug-Karosserieteil nach einem der Ansprüche 1 bis 9, **gekennzeichnet durch** einen symmetrischen Sandwich-Aufbau.

11. Fahrzeug-Karosserieteil nach einem der Ansprüche 1 bis 10, **dadurch gekennzeichnet, dass** der Träger (18) mindestens eine an die Außenhaut (16) grenzende Materialschicht (42) umfasst, die die Ausdehnung der Außenhaut (16) begrenzt.

12. Fahrzeug-Karosserieteil nach Anspruch 11, **dadurch gekennzeichnet, dass** die Materialschicht (42) eine Glasfasermatte ist.

13. Fahrzeug-Karosserieteil nach Anspruch 11, **dadurch gekennzeichnet, dass** die Materialschicht (42) eine Aluminiumschicht ist.

14. Fahrzeug-Karosserieteil nach einem der Ansprüche 1 bis 13, **dadurch gekennzeichnet, dass** es ein Fahrzeugdach ist.

## Claims

1. Vehicle body part, comprising a material composite with an outer skin (16), which forms a surface which lies on the outside with respect to a passenger compartment of the vehicle, and has a first coefficient of thermal expansion, and a support (18), on which the outer skin (16) is arranged and with which a backing is provided for the latter, **characterized in that** the support (18) comprises at least a first material ply (26, 34, 42), facing the outer skin (16), and a second material ply (30, 36, 38), facing away from the outer skin (18), the coefficients of thermal expansion of which differ, so that no deformation of the material composite occurs when there is a change in temperature, the first material ply (26, 34, 42) and the second material ply (30, 36, 38) being separated from each other by a spacer (28) consisting of a cardboard honeycomb, a plastic honeycomb or a plastic foam.

2. Vehicle body part according to Claim 1, **characterized in that** the coefficient of thermal expansion of the first material ply (26, 34) is less than the coefficient of thermal expansion of the second material ply (30, 36, 38) of the support (18).

3. Vehicle body part according to Claim 1 or 2, **characterized in that** the coefficient of thermal expansion of the second material ply (30, 36, 38) is less than the coefficient of thermal expansion of the outer skin (16).

4. Vehicle body part according to Claim 1 or 2, **characterized in that** the coefficient of thermal expansion of the second material ply (30, 36, 38) is greater than or equal to the coefficient of thermal expansion of the outer skin (16).

5. Vehicle body part according to Claim 1, **characterized in that** the spacer (28) is arranged between layers (26, 30, 34, 36) of a polyurethane/glass-fibre mixture, which preferably form the first and second material plies.

6. Vehicle body part according to Claim 1, **characterized in that** the spacer (28) is bounded on both sides by a barrier layer (44, 46), which preferably consists of a nonwoven material.

7. Vehicle body part according to one of Claims 1 to 6, **characterized in that** the second material ply (30, 36) has a lower glass fibre content than the first material ply (26, 34).

8. Vehicle body part according to one of Claims 1 to 7, **characterized in that** the support (18) comprises a backing foil (38) on its side facing away from the outer skin (16).

9. Vehicle body part according to Claim 8, **characterized in that** the backing foil (38) consists of ABS.

10. Vehicle body part according to one of Claims 1 to 9, **characterized by** a symmetrical sandwich structure.

11. Vehicle body part according to one of Claims 1 to 10, **characterized in that** the support (18) comprises at least one material layer (42) which is adjacent to the outer skin (16) and limits the expansion of the outer skin (16).

12. Vehicle body part according to Claim 11, **characterized in that** the material layer (42) is a glass fibre mat.

13. Vehicle body part according to Claim 11, **characterized in that** the material layer (42) is an aluminium layer.

14. Vehicle body part according to one of Claims 1 to 13, **characterized in that** it is a vehicle roof.

## Revendications

1. Pièce de carrosserie de véhicule, comprenant un matériau composite qui présente une peau extérieure (16) qui forme une surface située à l'extérieur de l'habitacle du véhicule et qui présente un premier coefficient de dilatation thermique, et un support (18) sur lequel la peau extérieure (16) est placée et rabattue,
**caractérisée en ce que**
le support (18) est constitué d'au moins une première couche de matière (26, 34, 42) tournée vers la peau extérieure (16) et d'une deuxième couche de matière (30, 36, 38) non tournée vers la peau extérieure (16), dont les coefficients de dilatation thermique diffèrent de telle sorte qu'une déformation du matériau composite soit empêchée en cas de variation de température, la première couche de matière (26, 34, 42) et la deuxième couche de matière (30, 36, 38) étant séparées l'une de l'autre par un écarteur (28) en nid d'abeilles en carton, en nid d'abeilles en matière synthétique ou en mousse synthétique.

2. Pièce de carrosserie de véhicule selon la revendication 1, **caractérisée en ce que** le coefficient de dilatation thermique de la première couche de matière (26, 34) est inférieur au coefficient de dilatation thermique de la deuxième couche de matière (30, 36, 38) du support (18).

3. Pièce de carrosserie de véhicule selon les revendications 1 ou 2, **caractérisée en ce que** le coefficient de dilatation thermique de la deuxième couche de matière (30, 36, 38) est inférieur au coefficient de dilatation thermique de la peau extérieure (16).

4. Pièce de carrosserie de véhicule selon les revendications 1 ou 2, **caractérisée en ce que** le coefficient de dilatation thermique de la deuxième couche de matière (30, 36, 38) est supérieur ou égal au coefficient de dilatation thermique de la peau extérieure (16).

5. Pièce de carrosserie de véhicule selon la revendication 1, **caractérisée en ce que** l'écarteur (28) est disposé entre des couches (26, 30, 34, 36) en un mélange de polyuréthane et de fibres de verre et forme de préférence la première et la deuxième couche de matière.

6. Pièce de carrosserie de véhicule selon la revendication 1, **caractérisée en ce que** l'écarteur (28) est délimité de part et d'autre par une couche de blocage (44, 46) constituée de préférence en un matériau de feutre.

7. Pièce de carrosserie de véhicule selon l'une des revendications 1 à 6, **caractérisée en ce que** la deuxième couche de matière (30, 36) présente une plus petite teneur en fibres de verre que la première couche de matière (26, 34).

8. Pièce de carrosserie de véhicule selon l'une des revendications 1 à 7, **caractérisée en ce que** le support (18) comprend une contre-feuille (38) sur son côté non tourné vers la peau extérieure (16).

9. Pièce de carrosserie de véhicule selon la revendication 8, **caractérisée en ce que** la contre-feuille (38) est constituée d'ABS.

10. Pièce de carrosserie de véhicule selon l'une des revendications 1 à 9, **caractérisée par** une structure en sandwich symétrique.

11. Pièce de carrosserie de véhicule selon l'une des revendications 1 à 10, **caractérisée en ce que** le support (18) comprend au moins une couche de matière (42) adjacente à la peau extérieure (16) et qui limite la dilatation de la peau extérieure (16).

12. Pièce de carrosserie de véhicule selon la revendication 11, **caractérisée en ce que** la couche de matière (42) est un mat de fibres de verre.

13. Pièce de carrosserie de véhicule selon la revendication 11, **caractérisée en ce que** la couche de matière (42) est une couche d'aluminium.

14. Pièce de carrosserie de véhicule selon l'une des revendications 1 à 13, **caractérisée en ce qu'**elle forme le toit d'un véhicule.
